# EUROPEAN PATENT SPECIFICATION

(11) **EP 4 552 779 B1**
(45) Date of publication and mention of the grant of the patent: **25.03.2026**
(21) Application number: 24211304.1
(22) Date of filing: 07.11.2024
(51) Int. Cl.: B27B 31/08, B23D 47/04, B27B 5/065

(54) **CUTTING MACHINE**
SCHNEIDEMASCHINE
MACHINE À DÉCOUPER

(30) Priority: 09.11.2023 IT 202300023604
(43) Date of publication of application: 14.05.2025
(73) Proprietor: Naldi, Valter, 40137 Bologna (IT)
(72) Inventor: Naldi, Valter, 40137 Bologna (IT)

(56) References cited:
- EP-A1- 4 008 508
- EP-B1- 3 647 004
- IT-A1- 202000 028 304
- IT-A1- 202100 027 578
- US-A1- 2022 193 802

## Description

### TECHNICAL FIELD

The invention relates to a cutting machine for cutting panels made of wood, polymers, composite materials, fibre-cement or the like.

### PRIOR ART

In the industry dealing with the processing of panels made of wood, polymers, composite materials, fibre-cement or the like, a cutting machine is known, which comprises a support frame defining a substantially horizontal support and/or feeding plane for at least one panel made of wood or the like; a cutting station; a main pushing device for moving at least one first panel forward and, if necessary, backward in a first direction through the cutting station; a secondary pushing device for moving at least one second panel forward and, if necessary, backward in the first direction through the cutting station; and a cutting device consisting of a saw carriage mounted in the cutting station so as to move in a second direction and along a cutting plane perpendicular to the first direction in order to cut the panels.

The feeding plane generally consists of a roller device mounted upstream of the cutting station, whereas the output table, mounted downstream of the cutting station, generally consists of one or more air cushion planes to facilitate the handling and unloading of the panels being processed.

In addition, the continuous application and implementation of automation in production processes led to the integration, in some cutting machines, of a robotic manipulator - as described in patent EP3647004B1 - mounted downstream of the cutting station or of the output table to retrieve the components cut from the original panels by means of the cutting device and definitively unload them from the cutting machine or feed them again to the main pushing device and/or to the secondary pushing device for the execution of further cuts in the same cutting station.

A trapdoor for the automatic unloading of swarf is provided between the cutting station and the output table.

The robotic manipulator comprises a base, a system of articulated arms connected to one another and to the base and a panel pick-up unit coupled to the articulated arms.

The panel pick-up unit comprises a frame coupled to the telescopic arms in a rotary manner and supports one or more movable arms provided with respective suction cups connected to a suction device.

The unloading of the panels by means of the suction cups of the robotic manipulator is determined by the need to form stable mixed stacks of panels of various sizes on the unloading pallets, placing the panels side by side and on top of one another according to their size and to the size of the pallets.

These long unloading operations undergone by the cut panels, in many cases even cut in a pack, namely with overlapping panels, greatly limit the productivity of the machine as the robotic manipulator, engaged in this operation, cannot operate in other areas of the cutting machine unless it stops the cut panel unloading operation and dedicates itself to the handling of panels in other areas of the machine.

This leads to a slowdown in production because the sole robotic manipulator responsible for all panel handling operations cannot keep up with the rhythm of the various cutting steps dictated by the multiple and simultaneous parts of the cutting machine.

A cutting machine according to the preamble of claim 1 is known from EP3647004B1.

### DESCRIPTION OF THE INVENTION

Therefore, one of the objects of the invention is to provide a cutting machine with a simple and inexpensive equipment capable of complementing the action of the robotic manipulator, which is left with the most complicated operations typical of a robotic system.

According to the invention, a cutting machine defined by the features of claim 1 is provided.

Preferred embodiments are defined by the dependent claims.

The invention will therefore be described, by way of explanation, but not by way of limitation, according to its preferred embodiments, but it is to be understood that variations and/or modifications can be made by people skilled in the art without for this reason going beyond the scope of protection, as defined by the appended claims.

### BRIEF DESCRIPTION OF THE DRAWINGS

The invention will be best understood upon perusal of the following description of some preferred embodiments, with reference to the following accompanying drawings:
- figure 1 schematically shows a plan view of a cutting machine according to the invention; said cutting machine is provided with a robotic manipulator;
- figure 2 shows a side view (from the right) of the cutting machine of figure 1, highlighting a transfer and positioning apparatus for panels produced in a cutting station;
- figure 3 shows a plan view of the cutting machine with the robotic manipulator during the panel unloading operation; two first longitudinal strips are transferred to a parking zone by means of the panel transfer and positioning apparatus;
- figure 4 shows a front view of the transverse cutting zone of the cutting machine while positioning the strips against the fixed square by means of the robotic manipulator;
- figure 5 shows a side view of the cutting machine while the robotic manipulator picks up and lifts a cut panel in order to unload it;
- figure 6 shows a plan view of the cutting machine at the time in which the robotic manipulator picks up and unloads the cut panels, while two second longitudinal strips are transferred to a parking zone by means of the panel transfer and positioning apparatus;
- figure 7 shows a plan view of the cutting machine at the time in which the robotic manipulator picks up and unloads the cut panels, while a third longitudinal strip is transferred to a parking zone by means of the panel transfer and positioning apparatus; and
- figure 8 shows a plan view of the cutting machine at the time in which the robotic manipulator picks up and unloads the cut panels, while a fourth longitudinal strip is transferred to a parking zone by means of the panel transfer and positioning apparatus.

### PREFERRED EMBODIMENT OF THE INVENTION

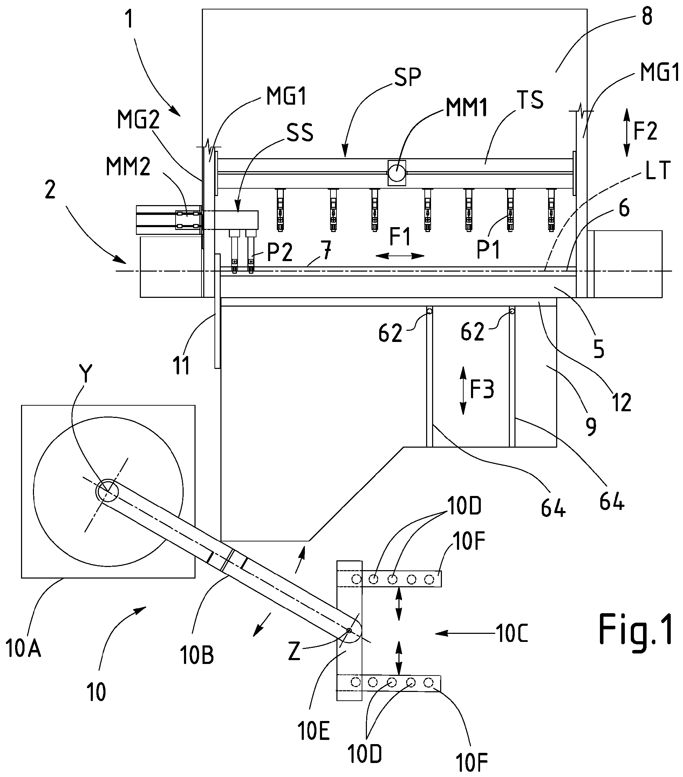

In the embodiment described herein, with reference to figures 1 to 10, number 1 indicates the cutting machine for panels (P) according to the invention.

For the purposes of this disclosure, the terms "panel" (P), "strip" (STR), etc. must all be considered as synonymous and as substantially flat elements (for example, panels of various sizes for the construction of furniture, panels of plastic material or relative strips, etc.) suited to be cut by means of the cutting machine 1 according to the invention or panels resulting from the cutting carried out by means of the same cutting machine 1.

Furthermore, in this description, the term "pack" is to be understood as a vertically stacked set of two or more panels (P) or strips (STR).

In this disclosure, the term "arrow" indicates a direction and possibly also a relative way, evoking - with the term arrow - the corresponding symbol that identifies a vector (which makes it possible to verify the direction of application and the relative way).

The cutting machine 1 is provided with an electronic control unit (numerical control or electronic system) (not shown), which is configured to control and manage the components of the cutting machine 1.

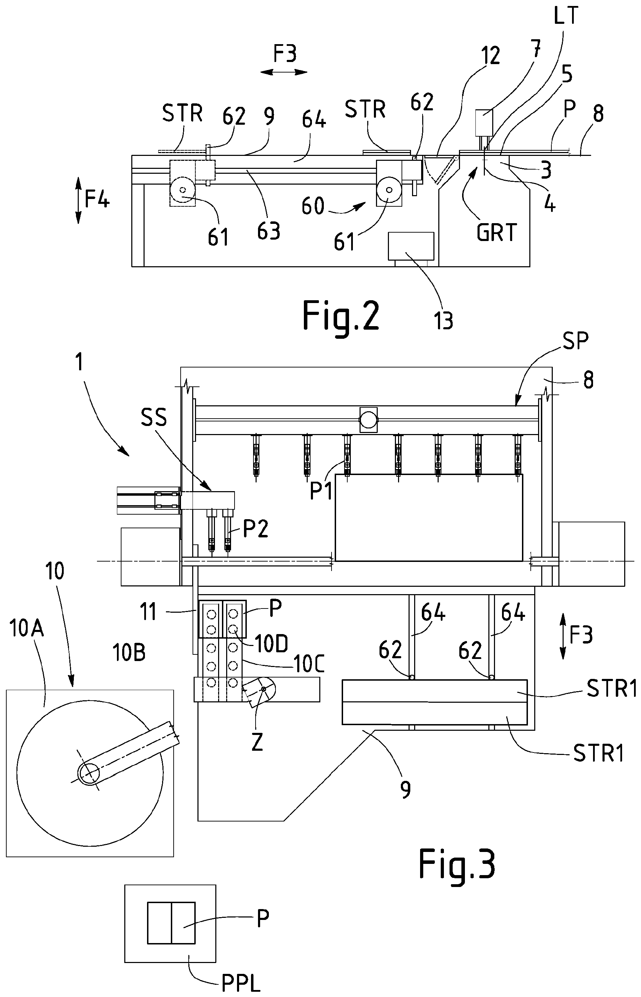

The cutting machine 1 is of the horizontal type with a cutting station 2 of the type with a cutting assembly (GRT) with a movable tool-holder carriage, which can slide and is operated in a known manner along a guiding base 3 (figure 2) according to directions and ways defined by an arrow (F1) (figure 1).

During the active cutting step, the tool or tools (a cutting blade 4, mounted on the cutting assembly (GRT), is visible in figure 2, whereas a possible scorer is not shown) are lifted (or lowered in a different machine type) above a base work plane 5 (figures 1 and 2) along the guiding base 3, while they are lowered (or lifted in a different machine type) during the step of returning to the start-of-cut position.

As it is known, in some cutting machines there generally are two cutting tools, a cutting tool (cutting blade 4) and a scorer tool (not shown), and during the cutting step they both slide within a cutting slit 6 (figure 1) obtained in the base work plane 5, whose middle line is generally defined as cutting line (LT) (figure 1).

As shown in the non-limiting example of figure 2, a known upper pressing member 7 is configured, during the cutting step, to lock the panels (P) on the base work plane 5 by means of a known vertical movement.

During the positioning of the panels (P), before the cut, the upper pressing device 7 always is in a lifted position.

In a known manner, the cutting machine 1 is provided with a main pushing device (SP), in the form of an overhead crane, provided with a first plurality of grippers (P1) and possibly with a secondary pushing device (SS) equipped with a second plurality of grippers (P2) (figure 1).

The cutting machine 1 for panels (P) normally comprises a feeding plane 8 located upstream of the cutting station 2 (figures 1, 2). Said feeding plane 8 can be, for example, of the roller type and can be provided with optional rotation means (not shown) for rotating the panels (P) and/or portions thereof in order to obtain the orientation needed to carry out the various cuts to size entailed in the cutting scheme to be performed.

In other words, this preliminary orientation before the cuts is carried out, with known means that are not shown herein, upstream of the cutting station 2 on the feeding plane 8.

The work area (AL) (figure 1) of the cutting machine 1 then comprises, in sequence, the aforementioned feeding plane 8, the base work plane 5 and continues past the base work plane 5 in the form of one or more support planes 9.

The support plane (or planes) 9 downstream of the cutting station 2 is located, preferably but not necessarily, at the same level as the other two planes 5 and 8 and is intended to support the panels (P), the strips (STR) and any other cut portions to allow for their correct orientation and possible reinsertion in the cutting machine 1 by a robotic manipulator 10 also in charge of unloading the cut panels (figures 1, 3, 4, 5, 6, 7, 8) (see below).

In a known manner, the main pushing device (SP) and the secondary pushing device (SS), when present, by means of the relative grippers (P1), (P2), are configured to pick up the various elements to be cut (panels (P), strips (STR), etc.) from the feeding plane 8 (or from the support plane 9) and to position them, according to the set program, on the cutting line (LT) where the cutting of said elements takes place by means of the cutting station 2 and, in particular, by means of the blade 4.

The operating field of the main pushing device (SP) extends above the feeding plane 8, which, therefore, has a width almost coinciding with that of the cutting line (LT) and a length almost coinciding with the usable stroke of the main pushing device (SP) determined by the rear limit stop in its retracted position (not shown) and by the cutting line (LT) in its advanced position.

In some cutting machines, the rear limit stop of the main pushing device (SP) can be extended to allow the panels (P) to be automatically loaded from an area behind the feeding plane 8 and the front limit stop can be extended beyond the cutting line (LT) and up to and/or near the support plane 9.

In the embodiment shown herein, on the main pushing device (SP) and, in particular, on a cross member (TS) thereof (figure 1), there are fixed the aforementioned grippers (P1) for locking and transporting the panels (P) and the strips (STR) to be cut to size.

The secondary pushing device (SS) (figure 1) has a usable stroke almost identical to that of the main pushing device (SP) and has at least one end that is forced to slide along respective second guiding means (MG2) parallel to the first guiding means (MG1) of the main pushing device (SP).

Furthermore, the main pushing device (SP) is operated, along the first guiding means (MG1), by first longitudinal moving means (MM1) of the known type (figure 1), whereas the secondary pushing device (SS) is operated along the second guiding means (MG2) by second longitudinal movement means (MM2) of the known type (figure 1).

In the solution shown herein, the secondary pushing device (SS) and the main pushing device (SP) are located at different heights with respect to the feeding plane 8 in order to avoid mutual interference and permit the respective independent movements along the same feeding plane 8. As a result, the main pushing device (SP) and the secondary pushing device (SS) share the same feeding plane 8 and the same cutting station 2.

In a known manner, therefore, the pushing devices (SP) and (SS) can move horizontally according to the direction and the ways identified by an arrow (F2) (figure 1) substantially perpendicular to the cutting line (LT) and, hence, to the aforementioned arrow (F1) according to a direction substantially parallel to the feeding direction of the panels in the cutting machine (1).

In a known manner, the secondary pushing device (SS) can possibly move laterally according to the direction and the ways (F1) in order to position its grippers (P2) depending on the width of the strips (STR) to be picked up and cut.

As shown in figures 1, 3, 4, 6, 7, 8, in the area generally used for the transverse cutting of the strips (STR) or of the panels (P), a reference square 11 is provided so that the strips (STR) or the panels (P) can stroke against it in order to be perfectly cut transversely at 90 degrees. In fact, the cutting machine 1 is configured to execute both longitudinal cuts on original panels (P) and transverse (cross) cuts on the produced strips (STR) to obtain the cut-to-size panels (P) as desired. In certain situation it is necessary to execute further cuts, generally named third or fourth rotation cuts, on panels already obtained from a previous cross cut operation. Panels (P) that, hence, should be again rotated and inserted into the cutting station 2 and in particular against the reference square 11 and into the grippers (P1 and or P2) of the main pusher (SP) and/or of the secondary pusher (SS).

According to figure 2, a trapdoor 12 for unloading the trimming residues is located between the base work plane 5 and the support plane 9.

The trapdoor 12 (figure 2) is therefore located downstream of the cutting station 2 with respect to the normal flow of the panels (P) (and/or of the strips (STR)).

This trapdoor 12 is used to automatically unload, in a known manner and under the work area (AL), the swarf (trimming residues) that is generated in the area of the cutting station 2.

A container 13 for collecting swarf (trimming residues) is located under the unloading trapdoor 12.

Alternatively, a conveyor belt (not shown) can be provided for the automatic removal of swarf.

As already mentioned above, the cutting machine 1 according to the invention is provided with the robotic manipulator 10 for locking and transferring the panels (P), said robotic manipulator 10 being shown in the attached figures in a non-limiting position downstream of the feeding plane 8 and of the cutting station 2.

In the non-limiting solution shown in the attached figures, the robotic manipulator 10 is located externally and next to the support plane 9 downstream of the cutting station 2 and beside the reference square 11.

In a known manner, the robotic manipulator 10 is controlled by the electronic control unit of the cutting machine 1, but it could also be controlled by an electronic control unit of its own (not shown), which is configured to communicate (exchange data) with the electronic control unit of the cutting machine 1.

Therefore, the electronic control unit, independently or together with other control units, is configured to operatively manage all the parts of the cutting machine 1 and, hence, all its operational phases, directly or indirectly including those of the robotic manipulator 10.

The electronic control unit is also configured to manage and store, instant by instant, all the phases relating to the panels being processed on the work area (AL) and, therefore, the dimensions of each single panel (P) or pack of panels (P), their exact position on the work area (AL) and, hence, also the phase or phases to which each single panel (P) or pack of panels (P) must be subjected in the relative cutting and/or unloading cycle are known instant by instant.

The robotic manipulator 10 is configured and designed to feed the cut strips (STR) and/or the cut panels (P) again to the main pushing device (SP) and/or to the secondary pushing device (SS) for the execution of the transverse cuts and/or of the further third or fourth phase cuts as previously said. Obviously, this means that previously obtained strips (STR) and/or panels (P) must be rotated and correctly fed to the cutting station 2.

In addition, the robotic manipulator 10 is configured and designed to unload the already finished cut panels (P) onto dedicated pallets (PPL) (evacuation means) (figure 10) and/or onto roller tracks (not shown) for their manual and/or automatic removal.

In a known manner, the robotic manipulator 10 (figures 1, 3, 4, 5, 6, 7, 8) comprises a base 10A, a system of articulated arms 10B connected to one another and to the base 10A and a pick-up unit 10C fixed to the articulated arms 10B.

In a known manner, the robotic manipulator 10 could consist of a manipulator member with Cartesian axes movements.

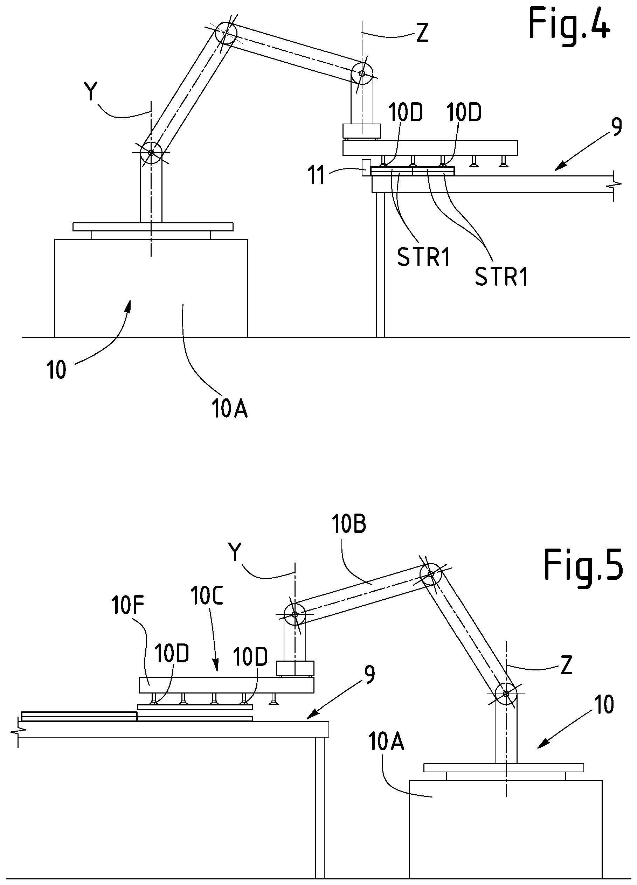

The robotic manipulator 10, which acts as a pick-up unit, can rotate around a relative axis (Y) (figures 1, 4).

Advantageously, though not necessarily, the pick-up unit 10C of the robotic manipulator 10 comprises a plurality of suction cups 10D, which, in a known manner, are configured and designed to adhere to an upper surface of at least one panel (P) or of a strip (STR); said panel (P) or strips (STR) possibly being part of a pack of panels (P) or of a pack of strips (STR), respectively. The panels (P) (or the strips (STR)) to be moved by the robotic manipulator 10 are gripped by means of the suction cups 10D.

In particular, the pick-up unit 10C (figure 1) comprises a cross member 10E hinged, in a known manner, to the articulated arms 10B in the area of an axis (Z) and two arms 10F on which the aforementioned suction cups 10D are mounted. These arms 10F, by means of known means, can be moved towards/away from one another, sliding on the cross member 10E, in order to adjust the pick-up system according to the dimensions of the strips (STR) or of the panels (P) to be handled.

In a further solution (not shown), the arms 10F of the robotic manipulator are provided with poles that are vertically movable according to the direction and the ways (F4) and are configured to lock and push the panels (P) or the packs of panels (P) and/or the strips (STR) or the packs of strips (STR) and to transfer them by having them slide on the work area (AL) and, in particular, on the support plane 9 against the reference square 11.

As already mentioned above, one of the objects of the invention is to provide a cutting machine 1 with a simple and inexpensive equipment configured to complement the action of the robotic manipulator 10, which is only left with the most complicated operations typical of a robotic system.

In figure 2, under the support plane 9 there is an independent apparatus 60 for transferring the panels (P) (or the strips (STR)) coming out from the cutting station 2 according to the invention.

This apparatus 60 comprises a carriage 61 provided with two poles 62 (retractable lifting elements), which, in the rest position, are recessed and under the support plane 9. The carriage 61, driven by its own and known means, can translate on a linear guide 63 according to a direction and ways identified by an arrow (F3) (figure 2) perpendicular to the cutting line (LT) and substantially parallel to the arrow (F2).

The two poles 62 can slide in respective grooves 64 made on the support plane 9 (figure 1). Since the grooves 64 are parallel to the linear guide 63, the two poles 62 can only translate according to the aforementioned arrow (F3).

The two poles 62, by means of known means which are not shown herein, can translate vertically according to a direction and ways identified by an arrow (F4). The arrow (F4) is perpendicular to the surface of the support plane 9 (figure 2).

Therefore, when needed, the two poles 62 can disappear under the support plane 9, thus allowing the panels (P) (or the strips (STR)) to freely move on the support plane 9, or they can be lifted (according to the arrow (F4)) above the support plane 9 in order to be able to push one or more strips (STR) at a time, even in a pack, according to a direction and ways indicated by the arrow (F3) orthogonal to the cutting station 2. Both situations are shown in figure 2.

The transfer and, hence, the removal from the cutting station 2 and the positioning of the panels (P) or of the strips (STR) in a relative parking zone on the work area (AL) and, in particular, on the support plane 9 are carried out through sliding.

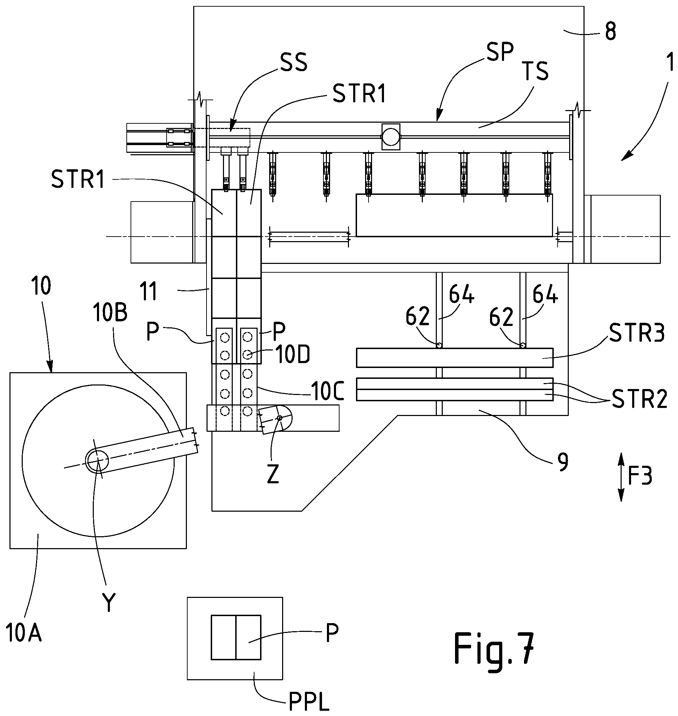

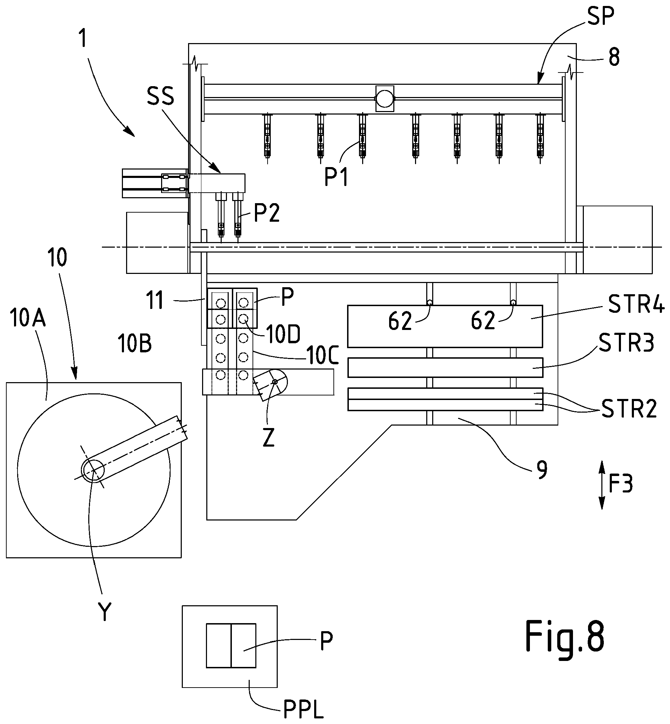

One of the advantages of using the apparatus 60 lies in that, during the step of unloading the panels (P) onto the pallet (PPL) (figure 3, 5, 6, 7, 8) carried out through the use of the robotic manipulator 10, the step of moving the strips (STR) away from the cutting station 2 (figure 2) and of spacing of the strips (STR) apart from one another (figures 7, 8), according to a program set in the electronic control unit, can be carried out by the apparatus 60. In practice, the apparatus 60 works substantially simultaneously, basically in masked time, with respect to the action of the robotic manipulator 10.

In this way, the robotic manipulator 10 can only concentrate on the 90-degree rotation of the strips (STR) for the execution of the relative transverse cuts (and/or on the rotation of the cut panels (P) that require further third or fourth rotation cuts) and on the unloading of the cut panels (P) onto pallets (PPL) (figures 7 and 8), with a consequent saving of the total cutting times needed for panels (P).

In practice, the electronic control unit is configured for the control and management of the apparatus (60) and of the robotic manipulator (10) and to control and manage all their relative simultaneous separation, positioning, transfer and unloading operation.

Moreover, the electronic control unit is configured for the control and management of the apparatus (60) and for the correct separation and for the precise positioning of the panels (P) and/or groups of panels (P) coming out of the cutting station (2) according to a program set in the electronic control unit.

In order to separate the strips (STR) or, possibly, the groups of strips (STR) from the remaining portion of panel being cut (P) (figure 2), the main pushing device (SP) pushes the strip (STR) (or the strips (STR)) to be separated on the support plane 9 by means of the remaining portion of the panel (P) until said strip (STR) (or strips (STR)) is positioned just beyond the two poles 62 in their rest position in the vicinity of the unloading trapdoor 12. Then the main pushing device (SP), by means of the relative grippers (P1), retracts the remaining portion of the panel (P), thus causing it to detach itself from the strip (STR) (or the strips) pushed on the support plane 9.

At this point, in the space thus created it is possible to insert the two poles 62 (which in the meantime have been lifted above the support plane 9 according to the arrow (F4)), which, by means of the translation of the carriage 61, place each strip (STR) (or each group of strips or pack of strips (STR)), according to the arrow (F3), in a predetermined and known parking position on the support plane 9. As soon as this operation has been carried out, the main pushing device (SP) can freely and immediately continue its cutting cycle without waiting any longer, with the purpose of obtaining a further strip or pack of strips (STR) or group of packs of strips (STR), which, in a manner similar to that described above, will be pushed in the vicinity of the support plane 9 ready to be transferred to the relative parking zone on the support plane 9. The positioning of this second strip or pack of strips (STR) (or group of strips or packs of strips (STR)) in the parking zone on the support plane 9 takes place by taking into account the presence or the absence of the previous strip (STR) and, in case, by making sure to leave the necessary space between them.

This operation aimed at obtaining said separation and precise positioning of the strip or strips (STR) on the support plane 9 is determined by the need to have a transverse cutting evenness in the various groups of strips (STR) placed in the parking zone; in practice, the strips or packs of strips (STR) with the same transverse cutting cycle will be grouped together.

The separation is also necessary in order to facilitate the picking up of the single strips (STR) or groups of strips (STR) by the robotic manipulator 10 configured to transfer them in the transverse cutting zone and against the reference square 11 by means of the pick-up unit 10C or other dedicated means.

Figure 3 shows, in plan view, two packs of strips (STR1) moved and positioned on the support plane 9 in a well-defined position by means of the two poles 62 of the apparatus 60. All this permits the continuation, without any interruption, of the unloading cycle of the previous cut and finished panels (P).

As soon as this unloading operation shown in figure 3 has been completed, the robotic manipulator 10 proceeds to transfer the strips (STR1), possibly with several cycles, to the transverse zone and against the reference square 11 (figure 4) so that the relative transverse cutting operation is carried out by means of the main pushing device (SP) or possibly by means of the secondary pushing device (SS).

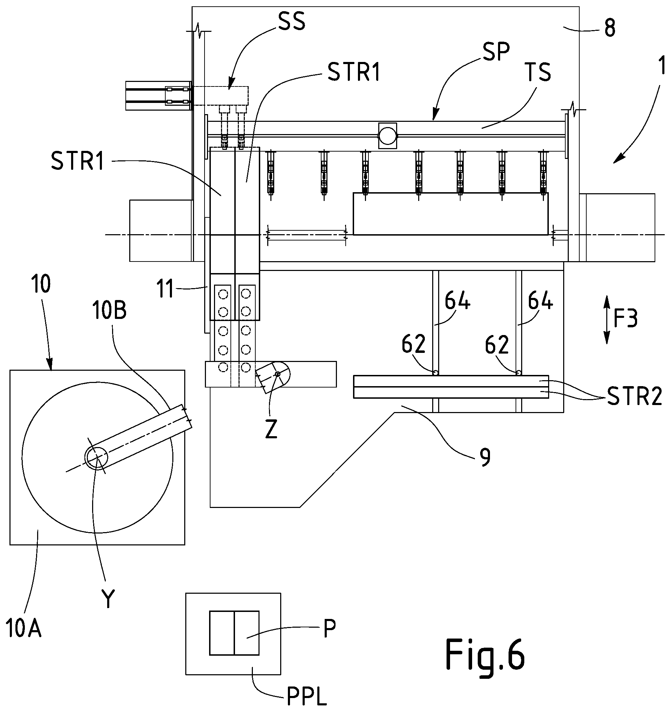

Figure 6 shows the simultaneous operations for the transfer of the two strips (STR2) to the area of their relative parking on the support plane 9 and for the unloading of the panels (P) (see the detail of figure 5) cut transversely and obtained from the strips (STR1) previously rotated and transferred by the robotic manipulator 10. As a matter of fact, it must be noted here that the simultaneous action of the two pushing devices (SP) and (SS) gives the possibility of having a great productivity, which must, however, be adequately supported by the downstream members in charge of the subsequent processing phases.

Figure 7 shows how the pack of strips (STR3) was properly positioned and spaced apart from the packs of strips (STR2) previously positioned on the support plane 9 during the continuation of the unloading of the panels obtained from the previous strips (STR1) by the robotic manipulator 10 onto the pallets (PPL).

Figure 8 shows the subsequent processing sequence, wherein the main pushing device (SP), thanks to the use of the apparatus 60, was able to end the cutting operations by completing the cutting of the last pack of strips (STR4) of its cutting cycle, while the robotic manipulator 10 is still dealing with the unloading, onto the pallet (PPL), of the multitude of panels (P) produced during the transverse cutting of the two previous packs of strips (STR1).

Therefore, having already completed the cutting operation for all the strips (STR2, STR3, STR4) permits the immediate use of the main pushing device (SP) to simultaneously - and possibly in combination with the secondary pushing device (SS) - carry out the transverse cutting of the packs of strips (STR2) and (STR3), which, as mentioned above, have different cutting programs.

As soon as this operation has been completed for the strips (STR2) and (STR3), if applicable, the secondary pushing device (SS) will carry out the transverse cutting of the last pack of strips (STR4) and the robotic manipulator 10 will deal with the relative unloading of the cut panels, while the main pushing device (SP), in total autonomy and together with the apparatus 60, can continue its longitudinal cutting program for the production of new strips (STR) without interrupting the action of unloading the panels (P) onto the pallet (PPL) or onto other forms of evacuation carried out by the robotic manipulator 10.

As a matter of fact, as one can assume, without the apparatus according to the invention, one of the two actions, that of the main pushing device or that responsible for the unloading of the panels, should be interrupted in order to continue only one of the two. This is also true in the case of a cutting machine 1 with one single pushing device (SP), wherein its relative action in the transverse zone of the cutting machine 1 produces a large number of cut panels (P) to be unloaded by means of the robotic manipulator 10. In fact, in this case, the pushing device (SP) can continue with the execution of a new longitudinal cutting cycle to produce new panels and/or new strips (STR) from a new panel (P) without interruptions, while the robotic manipulator 10 performs the unloading of the previously produced panels (P).

The advantage offered by this innovative solution is represented, first of all, by the significant increase in the productivity of the cutting machine, precisely for the reasons set out above.

It must also be noted the extreme cost-effectiveness of this solution in relation to the decisive increase in productivity that is also increasing the return of investment of a very expensive machine such as a panel cutting machine 1 with a robotic manipulator 10.

## Claims

1. A cutting machine (1) for cutting panels (P) made of wood, polymers, composite materials, fibre-cement or the like, the machine comprising a base (3); a cutting station (2) configured for the execution of rip and cross cuts on said panels (P); at least a pushing device (SP; SS) to move at least one panel (P) through the cutting station (2) according to a first direction (F2) substantially orthogonal relative to said cutting station (2); a cutting assembly (GRT) mounted in the cutting station (2) and movable in a second direction (F1) along a cutting line (LT) substantially perpendicular to the first direction (F2) so as to cut said at least one panel (P); a work area (AL) for at least one panel (P) being defined by a feeding plane (8), by a work plane (5) and by a support plane (9); at least one robotic manipulator (10) configured for the constraint and transfer of the at least one panel (P) on said work area (AL); said at least one robotic manipulator (10) being configured to transfer said at least one panel (P) between different zones of the work area (AL) and/or to unload said at least one panel (P) outside the work area (AL); an electronic unit configured for the management and the control of all the members of the cutting machine (1); the cutting machine (1) being **characterized in that** said work area (AL) comprises at least one transfer and positioning apparatus (60) of the panels (P) coming out from said cutting station (2); said apparatus (60) comprises at least a carriage (61) movable, by means of means of its own, under said work area (AL) according to a third direction (F3) perpendicular to said cutting line (LT); said apparatus (60) being configured to transfer said panel (P) to a parking zone of the work area (AL) substantially simultaneously, that means in masked time, with respect to the functionality of said robotic manipulator (10) namely during the transfer and/or unload of the panels (P) carried out by said at least one robotic manipulator (10).

2. The cutting machine (1) according to claim 1, **characterized in that** said apparatus (60) comprises at least two liftable elements (62) moving between a first recessed configuration in the work area (AL) plane and a second configuration, in which at least a portion of them is temporarily projecting above the surface of said the work area (AL) where said panel (P) coming out of the cutting station (2) lies.

3. The cutting machine (1) according to any one of the preceding claims, **characterized in that** said apparatus (60) is configured to separate the individual panels (P) and/or the groups of panels (P) coming out of the cutting station (2) and to precisely position the same on the relative parking zone on work area (AL).

4. The cutting machine (1) according to any one of the preceding claims, **characterized in that** said apparatus (60) is associated with said support plane (9) downstream the cutting station (2) and **in that** said support plane (9) is configured to support the panels (P) and permit their correct orientation and their feeding in the cutting station (2) of the cutting machine (1) carried out by the robotic manipulator (10).

5. The cutting machine (1) according to claim 1, **characterized in that** the electronic control unit is configured for the control and management of said apparatus (60) and of said robotic manipulator (10) and to control and manage all their relative simultaneous separation, positioning, transfer and unloading operation.

6. The cutting machine (1) according to any one of the preceding claims, **characterized in that** the electronic control unit is configured for the control and management of said apparatus (60) and for the correct separation and for the precise positioning of the panels (P) and/or groups of panels (P) coming out of the cutting station (2).

7. The cutting machine (1) according to claim 1, **characterized in that** said robotic manipulator (10) is provided with pick-up means (10C) configured to pick up, lift and transport said panel (P).

8. The cutting machine (1) according to claim 1, **characterized in that** said robotic manipulator (10) is configured to transfer the panels (P) and/or the stacks of panels (P) by having the same panels (P) slide on said work area (AL).

9. The cutting machine (1) according to claim 1, **characterized in that** it comprises a secondary pushing device (SS) to move said at least one panel (P) through the cutting station (2) according to the direction (F2); said main pushing device (SP) and said secondary pushing device (SS) sharing the same feeding plane (8) and the same cutting station (2).

## Patentansprüche

1. Schneidmaschine (1) zum Schneiden von Platten (P) aus Holz, Polymeren, Verbundwerkstoffen, Faserzement oder dergleichen, wobei die Maschine umfasst: ein Grundgestell (3); eine Schneidstation (2), die zum Ausführen von Längs- und Querschnitten an den genannten Platten (P) eingerichtet ist; mindestens eine Schubeinrichtung (SP; SS), um mindestens eine Platte (P) in einer ersten Richtung (F2), die im Wesentlichen orthogonal zur genannten Schneidstation (2) verläuft, durch die Schneidstation (2) zu bewegen; eine in der Schneidstation (2) angeordnete Schneideinheit (GRT), die entlang einer Schneidlinie (LT) in einer zweiten Richtung (F1), die im Wesentlichen senkrecht zur ersten Richtung (F2) verläuft, beweglich ist, um die genannte mindestens eine Platte (P) zu schneiden; einen Arbeitsbereich (AL) für mindestens eine Platte (P), der durch eine Zuführebene (8), eine Arbeitsebene (5) und eine Stützebene (9) definiert ist; mindestens einen Roboter-Manipulator (10), der dazu eingerichtet ist, die mindestens eine Platte (P) im genannten Arbeitsbereich (AL) zu fixieren und zu bewegen; wobei der mindestens eine Roboter-Manipulator (10) dazu eingerichtet ist, die mindestens eine Platte (P) zwischen verschiedenen Zonen des Arbeitsbereichs (AL) zu überführen und/oder die mindestens eine Platte (P) außerhalb des Arbeitsbereichs (AL) zu entladen; eine elektronische Steuereinheit, die für die Verwaltung und Steuerung sämtlicher Komponenten der Schneidmaschine (1) eingerichtet ist; wobei die Schneidmaschine (1) **dadurch gekennzeichnet ist, dass** der genannte Arbeitsbereich (AL) mindestens eine Übergabe- und Positioniervorrichtung (60) für die aus der Schneidstation (2) austretenden Platten (P) umfasst; wobei die genannte Vorrichtung (60) mindestens einen Wagen (61) umfasst, der mittels eigener Antriebsmittel unterhalb des genannten Arbeitsbereichs (AL) in einer dritten Richtung (F3), die senkrecht zur genannten Schneidlinie (LT) verläuft, beweglich ist; wobei die genannte Vorrichtung (60) dazu eingerichtet ist, die genannte Platte (P) im Wesentlichen gleichzeitig, das heißt in verdeckter Zeit, in Bezug auf die Funktionsweise des genannten Roboter-Manipulators (10), also während der durch den mindestens einen Roboter-Manipulator (10) durchgeführten Überführung und/oder Entladung der Platten (P), in eine Parkzone des Arbeitsbereichs (AL) zu überführen.

2. Schneidmaschine (1) nach Anspruch 1, **dadurch gekennzeichnet, dass** die genannte Vorrichtung (60) mindestens zwei anhebbare Elemente (62) umfasst, die zwischen einer ersten, im Bereich der Ebene des Arbeitsbereichs (AL) vertieften Konfiguration und einer zweiten Konfiguration beweglich sind, in welcher mindestens ein Teil derselben vorübergehend über die Oberfläche des genannten Arbeitsbereichs (AL) hervorsteht, auf der die aus der Schneidstation (2) austretende Platte (P) liegt.

3. Schneidmaschine (1) nach einem der vorstehenden Ansprüche, **dadurch gekennzeichnet, dass** die Vorrichtung (60) dazu eingerichtet ist, die einzelnen Platten (P) und/oder die Gruppen von Platten (P), die aus der Schneidstation (2) austreten, zu trennen und diese genau auf der jeweiligen Parkzone auf dem Arbeitsbereich (AL) zu positionieren.

4. Schneidmaschine (1) nach einem der vorstehenden Ansprüche, **dadurch gekennzeichnet, dass** die genannte Vorrichtung (60) der genannten Stützebene (9) stromabwärts der Schneidstation (2) zugeordnet ist und dass die genannte Stützebene (9) dazu eingerichtet ist, die Platten (P) zu tragen und deren korrekte Ausrichtung sowie deren Zuführung in die Schneidstation (2) der Schneidmaschine (1), die durch den Roboter-Manipulator (10) ausgeführt wird, zu ermöglichen.

5. Schneidmaschine (1) nach Anspruch 1, **dadurch gekennzeichnet, dass** die elektronische Steuereinheit zur Steuerung und Verwaltung der Vorrichtung (60) und des Roboter-Manipulators (10) und zur Steuerung und Verwaltung aller ihrer relativen gleichzeitigen Trenn-, Positionier-, Transfer- und Entladevorgänge eingerichtet ist.

6. Schneidmaschine (1) nach einem der vorstehenden Ansprüche, **dadurch gekennzeichnet, dass** die elektronische Steuereinheit zur Steuerung und Verwaltung der Vorrichtung (60) und zur korrekten Trennung und zur genauen Positionierung der Platten (P) und/oder Gruppen von Platten (P), die aus der Schneidstation (2) austreten, eingerichtet ist.

7. Schneidmaschine (1) nach Anspruch 1, **dadurch gekennzeichnet, dass** der Roboter-Manipulator (10) mit Aufnahmemitteln (10C) versehen ist, die dazu eingerichtet sind, die Platte (P) aufzunehmen, anzuheben und zu transportieren.

8. Schneidmaschine (1) nach Anspruch 1, **dadurch gekennzeichnet, dass** der Roboter-Manipulator (10) dazu eingerichtet ist, die Platten (P) und/oder die Stapel von Platten (P) zu überführen, indem die Platten (P) auf dem genannten Arbeitsbereich (AL) gleiten.

9. Schneidmaschine (1) nach Anspruch 1, **dadurch gekennzeichnet, dass** sie eine sekundäre Schubvorrichtung (SS) umfasst, um die mindestens eine Platte (P) gemäß der Richtung (F2) durch die Schneidstation (2) zu bewegen; wobei die Hauptschubvorrichtung (SP) und die sekundäre Schubvorrichtung (SS) dieselbe Zuführebene (8) und dieselbe Schneidstation (2) teilen.

## Revendications

1. Machine à découper (1) pour la coupe de panneaux (P) en bois, polymères, matériaux composites, fibres-ciment ou similaires, du type comprenant une base (3) ; un poste de coupe (2) configuré pour l'exécution de coupes longitudinales et transversales sur lesdits panneaux (P) ; au moins un poussoir ((SP) ; (SS)) configuré pour déplacer au moins un panneau (P), à travers le poste de coupe (2) dans une première direction (F2) substantiellement perpendiculaire audit poste de coupe (2) ; un groupe de coupe (GRT) monté dans le poste de coupe (2) et mobile dans une deuxième direction (F1) le long d'une ligne de coupe (LT) sensiblement perpendiculaire à la première direction (F2) pour effectuer la coupe dudit au moins un panneau (P) ; une zone de travail (AL) dudit au moins un panneau (P) étant définie par l'ensemble d'un plan d'alimentation (8), d'un plan de travail (5) et d'un plan de support (9) ; au moins un manipulateur robotisé (10) configuré pour la fixation et la translation d'au moins un panneau (P) sur la zone de travail (AL) ; ledit au moins un robot manipulateur (10) étant configuré pour transférer ledit au moins un panneau (P) entre différentes zones de la zone de travail (AL) et/ou pour décharger ledit au moins un panneau hors de la zone de travail (AL) ; une unité de commande électronique configurée pour la gestion et le contrôle des organes de la machine à découper (1) ; la machine à découper (1) étant **caractérisée en ce que** ladite zone de travail (AL) comprend au moins un équipement (60) pour le transfert et le positionnement des panneaux (P), sortant dudit poste de coupe (2) ; ledit équipement (60) comprend au moins un chariot (61) déplaçable par translation avec ses propres moyens au-dessous de ladite zone de travail (AL) suivant une troisième direction (F3) perpendiculaire à ladite ligne de coupe (LT) ; ledit équipement (60) étant configuré pour déplacer par translation lesdits panneaux (P) dans une zone de stationnement de la zone de travail (AL) de manière sensiblement simultanée, c'est-à-dire en temps masqué, par rapport au fonctionnement dudit manipulateur robotisé (10), c'est-à-dire pendant les opérations de transfert et/ou de déchargement des panneaux effectuées par ledit au moins un manipulateur robotique (10).

2. Machine à découper (1) selon la revendication 1, **caractérisée en ce que** ledit équipement (60) comprend au moins deux éléments (62) mobiles entre une première configuration encastrée dans le plan de ladite zone de travail (AL) et une seconde configuration dans laquelle au moins une partie de ceux-ci est temporairement en saillie par rapport à la surface de ladite zone de travail (AL) sur laquelle repose ledit panneau (P) en sortie du poste de coupe (2).

3. Machine à découper (1) selon l'une quelconque des revendications précédentes, **caractérisée en ce que** ledit équipement (60) est configuré pour séparer les panneaux (P) et/ou les groupes de panneaux (P) sortant du poste de coupe (2) et pour les positionner avec précision dans la zone de stationnement correspondante sur la zone de travail (AL).

4. Machine à découper (1) selon l'une quelconque des revendications précédentes, **caractérisée en ce que** ledit équipement (60) est associé audit plan de support (9) en aval du poste de coupe (2) et **en ce que** ledit plan de support (9) est configuré pour supporter les panneaux (P) afin de permettre leur orientation correcte et leur réinsertion dans le poste de coupe (2) de la même machine à découper 1 par le manipulateur robotique 10.

5. Machine à découper (1) selon la revendication 1, **caractérisée en ce que** l'unité de commande électronique est configurée pour le contrôle et la gestion du fonctionnement de l'équipement (60) et du manipulateur robotique (10) et pour contrôler et gérer la simultanéité de toutes les opérations de séparation, de positionnement, de manutention et de déchargement des panneaux (P).

6. Machine à découper (1) selon l'une quelconque des revendications précédentes, **caractérisée en ce que** l'unité de commande électronique est configurée pour le contrôle de l'équipement (60) et pour la séparation correcte et le positionnement précis des panneaux (P) et/ou des groupes de panneaux (P) en sortie du poste de coupe (2).

7. Machine à découper (1) selon la revendication 1, **caractérisée en ce que** ledit manipulateur robotique (10) est doté d'une unité de préhension (10C) configurée pour la saisie, le soulèvement et le transport dudit panneau (P).

8. Machine à découper (1) selon la revendication 1 ou la revendication 4, **caractérisée en ce que** le manipulateur robotique (10) est configuré pour déplacer en translation des panneaux (P) et/ou des paquets de panneaux (P), par leur glissement sur la zone de travail (AL).

9. Machine à découper (1) selon la revendication 1, **caractérisée en ce qu'**elle comprend un poussoir secondaire (SS) pour déplacer ledit au moins un panneau (P) à travers le poste de coupe (2) suivant la direction (F2) ; ledit poussoir secondaire (SS) et ledit poussoir (SP) partageant le même plan d'alimentation (8) et le même poste de coupe (2).
